# EUROPEAN PATENT APPLICATION

(11) **EP 2 000 243 A2**
(43) Date of publication of application: **10.12.2008**
(21) Application number: 08157246.3
(22) Date of filing: 30.05.2008
(51) Int. Cl.: B23D 59/00, B25H 1/00

(54) **POWER TOOL HAVING IMAGING DEVICE AND DISPLAY DEVICE**

(30) Priority: 07.06.2007 US 810928
(71) Applicant: Robert Bosch GmbH, 70442 Stuttgart (DE)
(72) Inventor: Fischer, Ernest, Skokie, IL 60076 (US)
(74) Representative: Barth, Stephan Manuel

(57) **Abstract**

A hand held power tool assembly (10) is disclosed. The assembly (10) includes a hand held power saw (11) having (i) a housing (14), (ii) a saw blade (18), (iii) a base (28) having an opening (30) through which the saw blade (18) extends, and (iv) a motor (15) positioned within the housing (14) and configured to rotate the saw blade (18) in a path of movement. The assembly further includes an imaging device (40) attached to the base (28) of the power saw (11), the imaging device (40) being configured to generate data signals representative of a detected image. In addition, the assembly (10) includes a display device (44) attached to the housing (14) of the power saw (11), the display device (44) being configured to receive the data signals generated by the imaging device (40) and generate a visible representation of the detected image.

## Description

### Background of the Invention

The present invention relates to power tools, such as hand-held power tools.

The tool industry offers a variety of hand operated power tools for performing work on various types of workpieces. Examples of such tools include circular saws, jigsaws, routers, drills, etc. These power tools generally include a housing and an electric motor contained within the housing. The motor is configured to move a working element (e.g. blade for a circular saw, bit for a router, etc.) to perform work on a workpiece (e.g., a piece of wood, etc.).

Power tool operators often need to perform precise operations with their tools, such as cutting a piece of wood along a straight line, routing a detailed pattern into a surface, etc. Traditionally, to ensure an accurate cut when utilizing a handheld power tool, the operator of the device would scribe a line on the surface of a workpiece and then use this line as a guide along which to cut. It is a continuing challenge for a user of a handheld power tool to align the working element (e.g. the saw blade) with the line scribed on the material and/or maintain the working element tracking on the desired cut line. Accurate alignment and tracking of the working element of the tool requires that the user of the tool have good visibility of the point of contact between the working element and the workpiece.

Methods have been implemented to aid a tool user in aligning and guiding a power tool. Most of these methods involve the provision of a guiding mechanism for indicating the position of the working element of the tool in relation to the workpiece. For example, one such method that has been used is the inclusion of a sight guide or slot which can be aligned with a cut line. Typically located on the base of the tool, such as a circular saw, the guide slot is aligned with the blade in the forward cutting direction to provide a visual indication of the anticipated blade path through the workpiece. Another method for indicating a cut line that has been used includes projecting a laser beam onto the workpiece that is aligned with the saw blade path. Yet another method that has been used involves projecting a shadow using a light source positioned behind the saw blade, or behind an object such as a wire or bar aligned with the blade, to provide the necessary reference mark for indicating the position of the blade.

While these approaches may provide some assistance to the operator in achieving a reasonably accurate cut, the guiding mechanisms described above merely give the operator an indication of the blade position relative to the cut line. Moreover, misalignment of the prior art guiding mechanisms is possible due to vibration and other factors, and such misalignment tends to cause an incorrect indication of the blade path. Because the operator cannot directly monitor the blade travel, the misalignment may not be detected until substantial cutting has occurred.

Therefore, what is needed is a hand operated power tool that allows increased visibility at the point of contact between the working element of the tool and the workpiece thereby providing better accuracy for guiding and aligning the tool.

### Summary of the Invention

In accordance with one embodiment, there is provided a hand held power saw assembly. The assembly includes a hand held power saw having (i) a housing, (ii) a saw blade, (iii) a base having an opening through which the saw blade extends, and (iv) a motor positioned within the housing and configured to rotate the saw blade in a path of movement. The assembly further includes an imaging device attached to the base of the power saw, the imaging device being configured to generate data signals representative of a detected image. In addition, the assembly includes a display device attached to the housing of the power saw, the display device being configured to receive the data signals generated by the imaging device and generate a visible representation of the detected image.

According to another embodiment, there is provided a hand held power tool assembly. The assembly includes a hand held power tool having (i) a housing, (ii) a working element, and (iii) a motor positioned within the housing and configured to move the working element in a path of movement. The assembly further includes an imaging device supported by the hand held power tool, the imaging device being configured to generate data signals representative of a detected image. Also, the assembly includes a display device supported by the hand held power tool, the display device being configured to receive the data signals generated by the imaging device and generate a visible representation of the detected image.

One benefit of the present disclosure is that the power tool assembly provides increased visibility at the point of contact between the working element of the tool and the workpiece thereby providing better accuracy for guiding the tool with respect to the workpiece.

Other benefits and certain objects of the invention will become apparent from the following written description taken together with the accompanying drawings.

### Description of the Drawings

FIG. 1 is a perspective view of a hand-held power tool assembly showing the imaging device and the display device according to one embodiment of the disclosure.
FIG. 2 is a side elevational view of the tool assembly of FIG. 1;
FIG. 3 is a rear elevational view of the tool assembly of FIG. 1;
FIG. 4 is an enlarged fragmentary side elevational view of the tool assembly of FIG. 1 performing a cutting operation on a workpiece, and also showing the imaging device supported on the tool assembly; and
FIG. 5 is an enlarged fragmentary top elevational view of the tool assembly of FIG. 1 performing a cutting operation on the workpiece, and also showing the imaging device supported on the tool assembly.

### Description of the Preferred Embodiments

For the purposes of promoting an understanding of the principles of the invention, reference will now be made to the embodiments illustrated in the drawings and described in the following written specification. It is understood that no limitation to the scope of the invention is thereby intended. It is further understood that the present invention includes any alterations and modifications to the illustrated embodiments and includes further applications of the principles of the invention as would normally occur to one of ordinary skill in the art to which this invention pertains.

The present disclosure is directed to a power tool that includes an imaging device and a display device. The imaging device is mounted on the tool and configured to generate data signals representative of an image of the point of contact between the workpiece and the working element of the tool (the work area). The display device is operatively coupled to the imaging device and configured to receive the data signals generated by the imaging device and generate a visible representation of the point of contact (i.e. the work area). The display device is mounted on the power tool so that the operator may easily see the screen of the display device to thereby clearly view the work area during a cutting operation. While the specific example set forth in this application is directed to a hand-held circular saw, the teachings of the present disclosure may be used in connection with other power tools, such as routers, jig saws, drills, and the like.

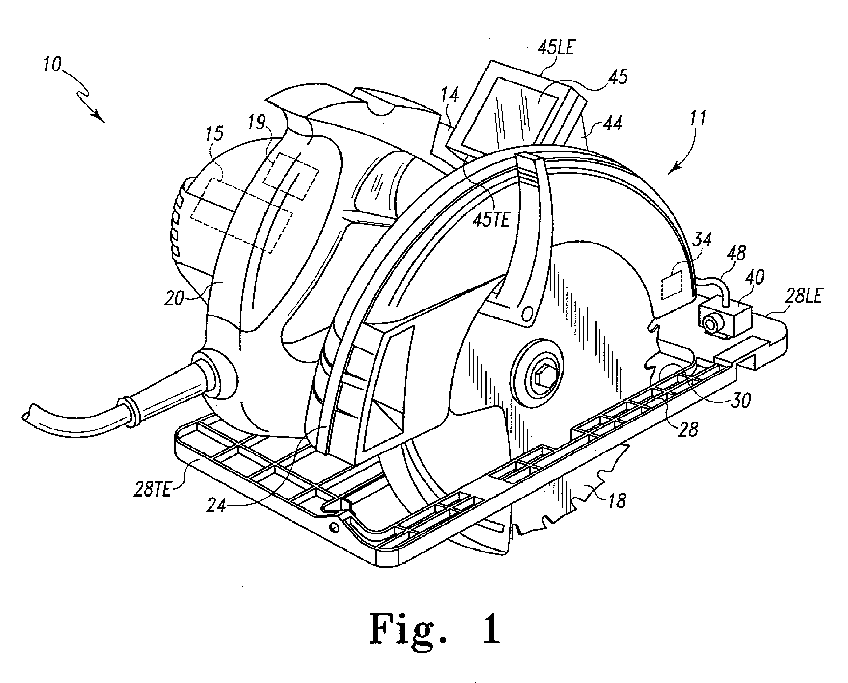

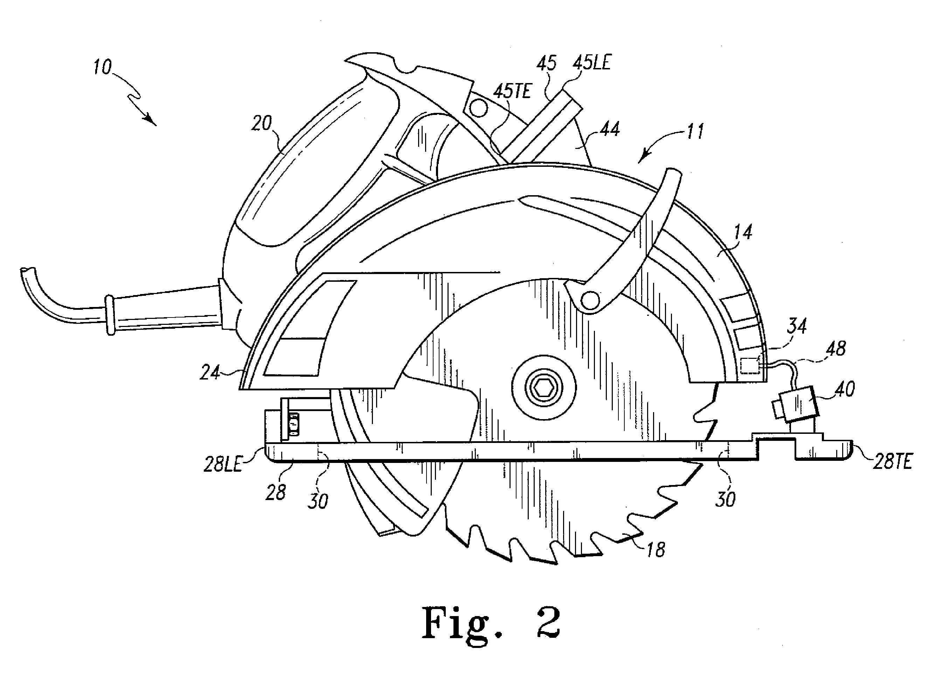

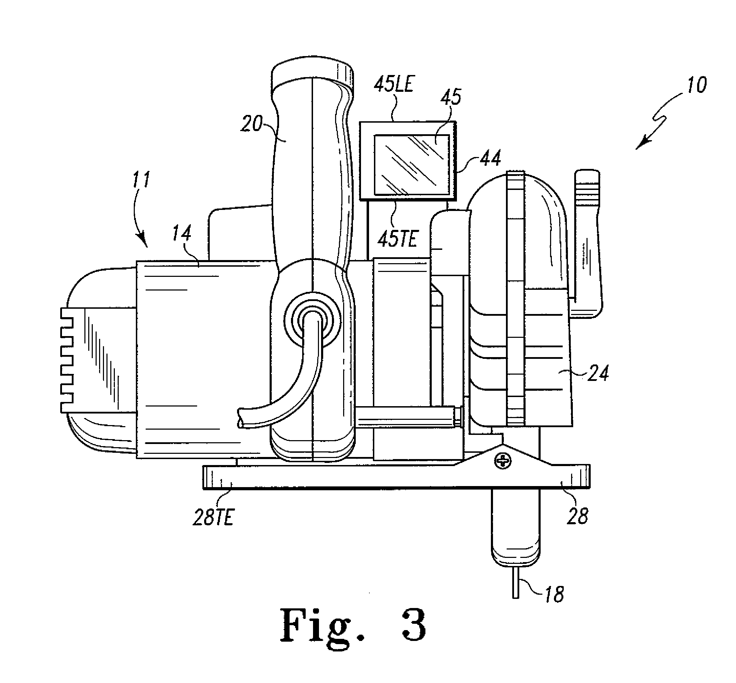

Turning now to the drawings, a power tool assembly is illustrated in FIGS. 1-5, and designated generally by reference numeral 10. The power tool assembly 10 includes a power tool 11 which in this embodiment is a power saw. The power tool 11 includes a housing 14 and an electric motor 15 (shown in phantom) positioned within the housing 14. The motor is connectable to a power source and is operable to rotatably drive a working element 18 to perform work on a workpiece. In the exemplary embodiment depicted in FIGS. 1-5, the power tool 11 is a circular saw and the working element 18 is a circular saw blade. However, it is to be understood that the teachings of the present disclosure may apply to other power tools. In particular, the power tool may be a router and the working element may be a router bit.

A handle 20 and a blade guard 24 are attached to the housing 14. The blade guard surrounds an upper portion of the saw blade 18. An on/off switch 19 (shown in phantom) is supported on the main handle 20 and selectively connects the motor 15 to the power source thereby enabling selective rotation of the saw blade 18. The circular saw 11 also includes a base 28 attached to the housing 14. The base 28 serves for guiding the hand circular saw on the surface of a workpiece to be sawed. A portion of the saw blade 18 extends through an opening 30 defined in the base 28. The base 28 includes a leading edge 28LE and a trailing edge 28TE. The opening 30 is interposed between the leading edge 28LE and the trailing edge 28TE. During proper operation of the saw 10, the leading edge 28LE of the base 28 is positioned in front of (or leads) the trailing edge 28LE of the base 28 during a cutting operation.

In the illustrated construction, the circular saw 11 includes a front pivot depth adjustment mechanism 34 (shown in phantom) operable to adjust the depth of cut of the saw blade 18. In other constructions (not shown), the circular saw 10 may include, for example, a rear depth adjustment mechanism or a drop shoe depth adjustment mechanism rather than the front pivot depth adjustment mechanism 34. However, it should be understood that the present disclosure may apply to a circular saw with any type of depth adjustment mechanism or with no depth adjustment mechanism.

The circular saw 11 may operate using a commercial power supply, such as an alternating current (AC) of, e.g., 110 volts, 120 volts or 220 volts. In the alternative, the circular saw may be "cordless" and may operate using a rechargeable battery, such as a nickel-cadmium or nickel metal-hydride battery. The present teachings may be advantageously utilized with both types of power tool designs, corded or cordless.

To aid a tool operator in aligning and guiding the saw blade during a cutting operation, the power tool assembly 10 further includes an imaging device 40 positioned on or otherwise supported by the power tool 11 to capture images of the work area, or the interface area at which the working element of the tool and the workpiece come into contact with each other. The power tool assembly 10 further includes a display device 44. The captured images of the interface area are output or otherwise transmitted to the display device 44 for viewing by the tool operator. In particular, the imaging device 40 is configured to generate data signals representative of a detected image. The display device 44 is configured to receive the data signals generated by the imaging device 40 and generated a visible representation of the detected image. In the disclosed embodiment, the detected image is an image of the interface area at which the working element of the tool and the workpiece come into contact with each other.

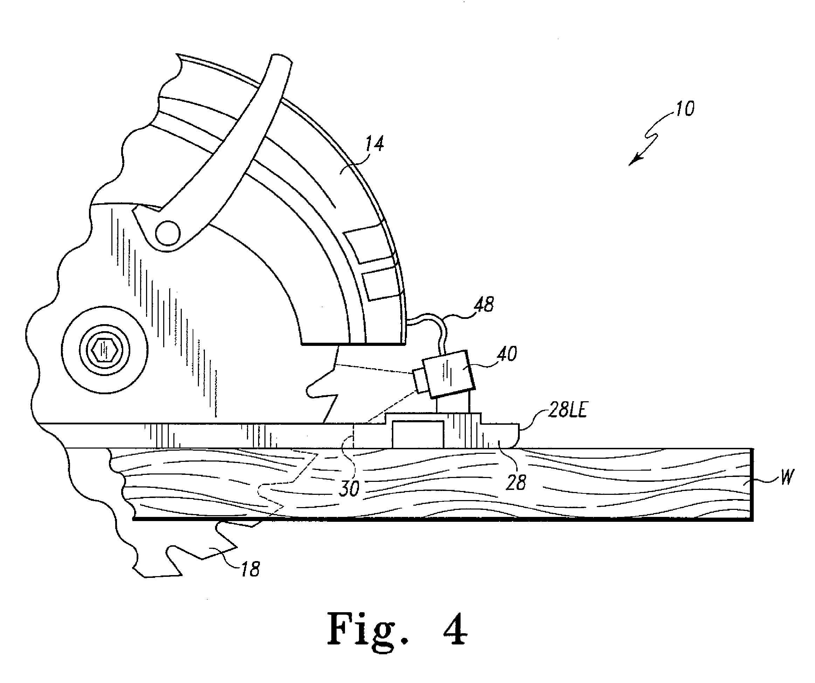

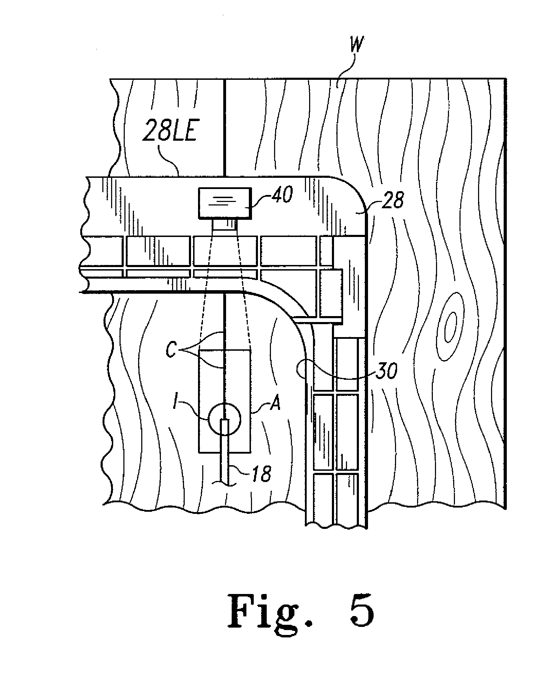

Referring to FIG. 4, there is shown an embodiment of the imaging device 40. An exemplary imaging device 40 may include a camera with video recording or video streaming functionality. Preferably, the video camera comprises a CCD (charge coupled device) camera although any suitable type of video camera may be used. The CCD camera 40 is mounted to the circular saw 11 so as to be positioned to capture images of the working element of the tool in contact with the workpiece as shown by the phantom lines in FIGS. 4 and 5. In one embodiment, the CCD camera 40 is mounted to the base 28 by fasteners (not shown). Alternatively, the CCD camera 40 is mounted to the base by an adhesive (not shown). The camera 40 is advantageously positioned on the base 28 substantially directly in front of the blade 18 of the circular saw 1 a in line with plane defined by the rotating saw blade 18. FIG. 5 shows an exemplary image area A of the camera 40. As can be seen, the image area A preferably includes at least the interface area between the working element 18 and the workpiece W as well as a portion of the workpiece in front of the interface area. By taking images of the area in front of the blade 18 on the workpiece, a portion of a cut line C may be included in the image to aid a tool operator in maintaining the working element 18 in alignment with the cut line C during a cutting operation.

Referring to FIG. 4, the CCD camera 40 may be elevated slightly with respect to the base 28 so that the camera may be tilted at a downward angle in relation to a horizontal plane defined by the base 28. The downward tilt of the camera allows the camera to capture images of the interface area A at the point of contact between the saw blade 18 and a workpiece W, as well as the area of the workpiece directly in front of the contact point as shown in FIGS. 4 and 5. The CCD camera 40 may be mounted to the base in any suitable manner. In one embodiment, the CCD camera is fixedly mounted to the base by fasteners (not shown). In this embodiment, the alignment and orientation of the imaging device 40 may be provided during manufacturing of the power tool assembly 10. Alternatively, the CCD camera may be provided with a position adjustment mechanism (not shown) that allows a tool operator to selectively adjust the position of the camera 40 with respect to the base 28. For instance, the position adjustment mechanism would allow the imaging device 40 to be adjusted in relation to the base 28 in any of the following directions and/or orientations: laterally (i.e. from the left lateral side of the base 28 to the right lateral side, and vice versa), axially (i.e. away from the point of contact of the blade and the workpiece, and vice versa), and rotationally (i.e. at any of a plurality of angles of tilt of the camera 40 with respect to the plane defined by the base 28, for example, one angle of tilt being shown in FIG. 4).

Video data representative of detected images of the interface area A in the form of video signals are provided or otherwise transmitted to the display device 44 via a signal wire 48 which may be routed from the imaging device 40 through the housing 14 to the display device 44. Alternatively, the imaging device 40 may be configured to wirelessly transmit the video data to the display device 44. The display device 44 includes a display screen 45 which is configured to display images representative of the detected images thereon for viewing by the tool operator. The display screen 45 includes a leading edge 45LE and a trailing edge 45TE. The display device 44 is preferably configured as a liquid crystal display device, although other types of display devices may be used. In addition, the display device 44 may be a color or a black and white display device. In the embodiment of FIGS. 1-5, the display screen 45 is approximately 2"x2", although any suitably sized display screen may be used. A relatively small display screen, such as one sized to be 2"x2", provides for adequate viewing of the working area by the operator while not being bulky or visually obstructive to a user. It will be appreciated that the imaging device 40 and/or the display device 44 includes the necessary data format conversion circuitry as is well know in the art.

The display device 44 is positioned on or otherwise supported by an upper portion of the housing 14 and oriented to display images toward the rear of the power tool 11 as shown in FIGS. 1-3. This positioning allows the operative part of the display screen 45 to remain in the field of view of a tool operator while the operator is in a natural work position. As shown in FIGS. 1-3, the display screen 45 is angled or otherwise tilted relative to horizontal with the top edge of the display screen 45 being positioned vertically higher than the bottom edge of the display screen 45. The exact angle or tilt of the display screen 45 depends on the configuration of the tool assembly, and the preference of the operator. The angle of the display screen 45 may selected to be vertical or horizontal or any angle therebetween.

The display device 44 may be mounted to the saw housing in any suitable manner such as with fasteners (not shown) or an adhesive (not shown). In one embodiment (not shown), the display device 44 may be partially mounted within the housing 14 so that only the viewing portion of the display screen 45 is visible to the operator. Therefore, the housing can protect the display device 44 from damage that may occur from dropping the tool assembly 10. Moreover, the display device 44 may be fixedly mounted to the housing 14, or alternatively, the display device 44 may be attached to the housing in a manner that allows adjustment of the orientation of the display device 44 relative to horizontal. For instance, the display device may be attached to the housing by a hinge mechanism (not shown) that allows pivotal movement of the display device 44 relative to the housing 14. In another embodiment, the display device may be attached to the housing via an adjustment mechanism (not shown) that allows the display device 44 to rotationally move about a vertical axis as well as pivotably move about a horizontal axis. Such adjustment mechanism would allow the screen to be temporarily fixed in relation to the housing at any of these rotational and pivotal positions.

Although power to the imaging device 40 and display device 44 may be powered from the power source used to drive the motor 15, the imaging device 40 and display device 44 may have their own power source, such as a battery. The imaging device 40 and display device 44 may be configured so that they are activated when the power to the circular saw is turned on. In an alternative embodiment, the imaging device 40 and display device 44 may be provided with a separate power switch (not shown) to turn the imaging device and display device on and off independently from the power tool 11. This allows a user to investigate the location of a cut to be made on a workpiece without the need to turn on the power to the power tool 11.

Thus, in summary, during use of the power tool described above, the imaging device is positioned to capture images of the point of contact between the working element of the tool 11 and the workpiece (i.e. the working area) as well as the area of the workpiece immediately in front of the point of contact. The video data is provided to the display device 44 which is attached to the upper portion of the saw housing where representative images of the work area may be viewed by the tool operator. The positioning and orientation of the display device is such that the tool operator may maintain a natural work position while viewing the display screen, and hence, the work area of the tool. Therefore, alignment of the working element of the tool with a cut line marked on the workpiece is facilitated during a cutting operation thereby enabling highly accurate and precise cuts in the workpiece.

While the invention has been illustrated and described in detail in the drawings and foregoing description, the same should be considered as illustrative and not restrictive in character. It is understood that only the preferred embodiments have been presented and that all changes, modifications and further applications that come within the spirit of the invention are desired to be protected.

## Claims

1. A hand held power tool assembly, comprising:
a hand held power tool having (i) a housing, (ii) a working element, and (iii) a motor positioned within said housing and configured to move said working element in a path of movement;
an imaging device supported by said hand held power tool, said imaging device being configured to generate data signals representative of a detected image; and
a display device supported by said hand held power tool, said display device being configured to receive said data signals generated by said imaging device and generate a visible representation of said detected image.

2. The assembly of claim 1, wherein:
said hand held power tool is a saw, and
said working element is a saw blade.

3. The assembly of claim 1, wherein:
said hand held power tool is a router, and
said working element is a router bit.

4. The assembly of claim 1, wherein:
said hand held power tool is a drill, and
said working element is a drill bit.

5. The assembly of claim 1, wherein:
said hand held power tool further includes a base configured to contact a workpiece during use thereof, and
said base has an opening defined therein though which said working element extends.

6. The assembly of claim 5, wherein:
said base includes a leading edge and a trailing edge,
said opening is interposed between said leading edge and said trailing edge, and
said imaging device is attached to said base at a location that is interposed between said leading edge and said opening.

7. The assembly of claim 1, wherein said imaging device includes a video camera attached to said base.

8. The assembly of claim 7, wherein said video camera includes a CCD (charge coupled device) camera.

9. The assembly of claim 1, wherein said display device includes an LCD (liquid crystal display) screen.

10. The assembly of claim 1, wherein:
said display device includes a display screen,
said display screen includes a leading edge and a trailing edge, and
said leading edge is positioned vertically above said trailing edge, whereby said display screen assumes a tilted orientation facing toward a rear of said hand held power tool.

11. The assembly of claim 1, wherein:
said display device includes a display screen, and
said display device is configured to generate said visible representation of said detected image on said display screen.

12. The assembly of claim 1, wherein:
said hand held power tool further includes a base configured to contact a workpiece during use of said power tool, and
said imaging device is secured to said base.

13. The assembly of claim 1, wherein said display device is secured to said housing.
